(19) Europäisches Patentamt
European Patent Office
Office européen des brevets

(11) Numéro de publication : **0 380 379 B1**

(12) **FASCICULE DE BREVET EUROPEEN**

(45) Date de publication du fascicule du brevet : **02.12.92 Bulletin 92/49**

(51) Int. Cl.$^5$ : **C08G 18/62**, C08G 18/10, C09J 175/04

(21) Numéro de dépôt : **90400049.4**

(22) Date de dépôt : **08.01.90**

(54) **Composition adhésive thermofusible réticulable à l'humidité, son procédé de fabrication.**

(30) Priorité : **19.01.89 FR 8900602**

(43) Date de publication de la demande : **01.08.90 Bulletin 90/31**

(45) Mention de la délivrance du brevet : **02.12.92 Bulletin 92/49**

(84) Etats contractants désignés : **AT BE CH DE DK ES FR GB GR IT LI LU NL SE**

(56) Documents cités :
**EP-A- 0 294 271**
**DE-A- 2 237 674**

(56) Documents cités :
**CHEMICAL ABSTRACTS, vol. 77, no. 12, 18 septembre 1972, page 48, résumé no. 76128h, Columbus, Ohio, US; & JP-A-71 40 419(M. YASUHIKO et al.) 29-11-1971**

(73) Titulaire : **ELF ATOCHEM S.A.**
**4 & 8, Cours Michelet La Défense 10**
**F-92800 Puteaux (FR)**

(72) Inventeur : **Boutillier, Jacques**
**9 Rue Ailly, Ecueil**
**F-51500 Reilly La Montagne (FR)**
Inventeur : **Lermat, Yves**
**Fontaine L'abbé**
**F-27470 Serquigny (FR)**

EP 0 380 379 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une composition adhésive thermofusible réticulable sous forme de prépolymère contenant des fonctions isocyanates libres formé du produit de réaction d'un copolymère éthylène-acétate de vinyle contenant des fonctions hydroxyles et d'un polyisocyanate. Cette composition associée généralement à une résine collante (tackifiante) permet de réaliser des collages résistant à température élevée après réticulation des fonctions-NCO libres habituellement sous l'effet de l'humidité atmosphérique.

Les adhésifs se présentent généralement sous forme liquide et se rigidifient après application en assurant la liaison des surfaces à unir. Cette rigidification résulte habituellement de la polymérisation ou de la polycondensation des composants de base de l'adhésif. Depuis quelques années, on cherche de plus en plus à présenter également les compositions adhésives sous forme solide. Il s'agit dans ce cas d'adhésifs thermofusibles (hot-melts) ayant pour base une résine thermoplastique, solide à température ambiante, possédant des propriétés adhésives. Ces adhésifs sont fluidisés à chaud, la liaison des surfaces à unir étant assurée quand l'adhésif redevient rigide au refroidissement. Ces adhésifs thermofusibles résultent généralement de la combinaison de deux constituants de base : une résine thermoplastique et une résine collante (tackifiante), auxquels on peut associer des additifs tels que cire, stabilisant, charge, plastifiants et autres. Les résines thermoplastiques de base les plus connues sont les polyamides, le polypropylène atactique et, en particulier, les copolymères éthylène-acétate de vinyle (EVA). Dans l'état actuel ces adhésifs thermofusibles possèdent de bonnes propriétés adhésives, mais présentent l'inconvénient de montrer une mauvaise tenue à la chaleur, tenue n'excédant guère 70 à 80°C.

Pour pallier ce désavantage une nouvelle génération de produits thermofusibles réticulables : adhésifs thermofusibles polyuréthannes réticulables, est développée. Ces produits sont préparés de façon classique par réaction de polyisocyanate sur des polyols de type polyester dont l'un au moins est solide à température ambiante. Ces adhésifs s'appliquent à haute température à l'état fondu. Ils présentent l'inconvénient d'être incompatibles avec les résines collantes (tackifiante) ce qui restreint fortement les possibilités de formulation. Ceci se traduit alors par une aptitude au collage limitée à certains supports bien définis. En outre, ces produits possèdent des temps ouverts de l'ordre de quelques minutes ce qui est trop long pour certaines applications à grandes cadences. Le temps ouvert d'un adhésif thermofusible est le temps disponible pour effectuer le collage, entre le moment où est appliqué l'adhésif à l'état fondu sur le premier support à coller et le moment où l'adhésif thermofusible n'est plus assez fluide pour permettre d'assembler correctement le deuxième support.

Un autre type d'adhésif thermofusible réticulable a été développé à partir des copolymères éthylène-acétate de vinyle hydroxylé réagissant avec un polyisocyanate bloqué en quantité stoechiométrique, comme décrit dans le JP 108484 ou la demande européenne 88401259. Ces adhésifs thermofusibles, compatibles avec les résines collantes (tackifiantes), possèdent de bonnes propriétés adhésives, mais présentent l'inconvénient de nécessiter des traitements thermiques à des températures d'au moins 120°C pendant plusieurs minutes pour assurer leur bonne réticulation. De telles conditions de collages ne sont pas acceptables pour certains supports fragiles thermiquement.

La composition adhésive thermofusible réticulable selon l'invention présente l'avantage de réticuler, sous l'effet de l'humidité atmosphérique à des températures inférieures à 120°C et généralement comprises entre 10 et 60°C. Cette composition adhésive thermofusible réticulable est essentiellement constituée d'un produit de réaction d'un copolymère EVA possédant des fonctions hydroxyles avec un polyisocyanate en proportion telle que le rapport des fonctions NCO du polyisocyanate aux fonctions OH de l'EVA soit inférieur ou égal à 5 et supérieur à 1.

Cette composition adhésive thermoplastique réticulable peut être utilisée seule dans la mesure où la viscosité initiale à l'état fondu du copolymère éthylène-acétate de vinyle hydroxylé est comprise entre 0,1 et 100 Pa.s. Toutefois il n'est pas exclu d'utiliser une composition dont la viscosité initiale du copolymère à l'état fondu est supérieure à 100 Pa.s. et inférieure à 10000 Pa.s, mais dans ce cas on associe le prépolymère représentant la composition à une résine collante (tackifiante). Dans le cas de l'association de la composition adhésive à la résine collante (tackifiante), la viscosité à l'état fondu de mélange est de préférence comprise entre 0,1 et 100 Pa.s ; ce qui fait qu'il n'est pas non plus exclu d'associer une résine collante à la composition même quand dans cette dernière le copolymère initial éthylène-acétate de vinyle possède une viscosité à l'état fondu inférieure à 100 Pa.s et cela dans le but d'abaisser en dessous de 100 Pa.s la viscosité à l'état fondu du mélange. Afin d'obtenir la viscosité telle que prévue à l'état fondu une résine collante (tackifiante) peut être associée à la composition adhésive en proportions de 0 à 70 parties en poids de résine collante (tackifiante) pour 100 à 30 parties en poids de compositions adhésive thermoplastique réticulable. Dans les conditions de l'invention il est recommandé que le prépolymère résultant de la réaction EVA hydroxylé-polyisocyanate, ou le mélange de prépolymère et de résine collant (tackifiante), possède une viscosité déterminée, c'est-à-dire suffisamment fluide, pour permettre une prise de collage rapide à température relativement basse en milieu atmosphérique

en vue de réaliser un collage pouvant résister par la suite jusqu'à une température d'au moins 150°C.

Comme il est précédemment décrit, la composition adhésive thermoplastique résulte de la réaction, lors du mélange à l'état fondu, d'un copolymère EVA possédant des fonctions hydroxyles et d'un polyisocyanate en excès pour réaliser un prépolymère à fonctions NCO libres, la teneur en fonctions NCO libres dans la prépolymère étant de préférence comprise entre 1 et 15 % en poids. Cette teneur en fonction NCO est exprimée par le pourcentage en poids de fonctions NCO libres par rapport à la masse totale de prépolymère. L' EVA à fonctions hydroxyles libres est un copolymère connu de l'éthylène, de l'acétate de vinyle et d'un monomère éthylénique possédant une fonction hydroxyle primaire ou secondaire. Ce copolymère peut être obtenu, de façon également connue, soit par saponification partielle de l'acétate de vinyle du copolymère éthylène-acétate de vinyle, soit par greffage sur le copolymère éthylène-acétate de vinyle du monomère éthylénique hydroxylé, soit encore par terpolymérisation directe des trois monomères.

Le monomère éthylénique possédant une fonction hydroxyle est de préférence un de ceux de la formule générale suivante :

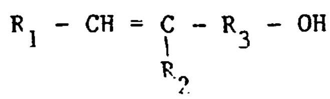

dans laquelle

$R_1$ représente l'hydrogène ou un radical hydrocarboné contenant de 1 à 8 atomes de carbone

$R_2$ représente l'hydrogène ou le groupement méthyl

$R_3$ représente un groupement ester, amide ou $(CH_2)_n$ avec "n" représentant un nombre de 0 à 10.

Parmi ces monomères on peut citer : l'acrylate d'hydroxyéthyle, le méthacrylate d'hydroxyéthyle, l'alcool allylique, l'alcool oléylique, l'alcool vinylique, la N-hydroxyméthylacrylamide.

La composition recommandée de l'EVA hydroxylé est une combinaison en poids rapporté aux monomères initiaux de 45 à 93 % d'éthylène, de 5 à 40 % d'acétate de vinyle et de 2 à 15 % de monomère éthyléniquement insaturé possédant une fonction hydroxyle. Préférentiellement cet EVA contient de $2x10^{-2}$ à $15x10^{-2}$ mole d'OH pour 100 g. de copolymère.

L'EVA hydroxylé est mélangé à l'état fondu à un polyisocyanate, en proportion précédemment donnée, possédant au moins deux fonctions NCO par molécule. Le polyisocyanate est de préférence choisi parmi les polyisocyanates polyfonctionnels aliphatiques, cycloaliphatiques, aromatiques et hétérocycliques.

Sont particulièrement recommandés les diisocyanates tels que le toluène diisocyanate, le diphénylméthane diisocyanate, le diisocyanate d'hexaméthyle et l'isophorone diisocyanate.

A la température du mélange, inférieure habituellement à 120°C, la réaction entre les NCO et les OH est rapide et s'effectue en quelques heures au maximum. Le prépolymère obtenu réticule au contact de l'humidité atmosphérique ; il convient, pour sa bonne conservation, de le stocker à l'abri de l'humidité.

Ce prépolymère, lorsque sa viscosité à l'état fondu est conforme, constitue à lui seul la composition pour adhésif thermofusible réticulable à l'humidité. Lorsque le prépolymère à l'état fondu est trop visqueux, il peut être mélangé, afin de diminuer la viscosité à une résine collante (tackifiante) en proportion telle que déjà donnée.

Lorsqu'il est prévisible que le prépolymère possèdera une viscosité trop élevée à l'état fondu, il est avantageux d'ajouter la résine collante (tackifiante) in situ avec les réactifs de prépolymérisation :
EVA hydroxylé et polyisocyanate.

Tout en abaissant la viscosité du prépolymère, la résine collante (tackifiante) peut conférer à l'adhésif thermofusible réticulable un meilleur pouvoir collant. Ces résines sont généralement des composés de bas point de fusion, habituellement inférieur à 100°C, et de bas poids moléculaire de l'ordre de 400 à 2 500. Comme leur nom l'indique, ces résines apportent du poissant : propriété qui provient soit du haut degré de plastification de la composition du prépolymère, soit d'une compatibilité limite avec la composition prépolymérique. Ces résines collantes (tackifiantes), connues en elles-mêmes appartiennent principalement à trois grandes familles :
les colophanes et leurs dérivés hydrogénés, dismutés, maléisés, esters,

les résines terpéniques et,

les résines du pétrole comme par exemple : aliphatiques, aliphatiques modifiées aromatiques, et, hydrogénées.

Selon le taux d'hydrométrie ambiant et la température de collage, la réticulation de la composition adhésive s'effectue généralement dans un temps compris entre quelques heures et quelques jours. Ceci constitue le temps de réticulation habituel des adhésifs polyuréthannes réticulant à l'humidité. Par contre, le temps ouvert de cette nouvelle composition thermofusible réticulable sera voisin de celui des adhésifs thermofusibles

conventionnels à base de copolymères éthylène-acétate de vinyle c'est-à-dire de quelques secondes à quelques dizaines de secondes.

Les exemples suivants illustrent l'invention sans la limiter.

EXEMPLE 1

Dans un malaxeur BRABENDER, régulé à 90°C et dont les pales tournent à 50 tours par minute, on introduit :

- 29,2 g. d'un terpolymère de composition en poids :

70 % d'éthylène
25 % d'acétate de vinyle
5 % d'acrylate d'hydroxyéthyle

L'indice de fluidité du terpolymère (melt index) est de 10 (mesuré à 190°C - 2,16 kg selon la norme ASTM D-1238). Sa viscosité à l'état fondu est de 8000 Pa.s

- 12,6 g. de résine terpène-phénol (DERTOPHENE T ®)
- 12,6 g. de cire éthylène/acétate de vinyle (Cire AC430 ®)

Quand le mélange est homogène et sa température stabilisée à 90°C, on introduit 2,8 g. d'isophorone diisocyanate. Le malaxage est maintenu pendant 10 minutes. La préparation de viscosité d'environ 100 Pa.s est sortie du malaxeur, puis utilisée pour réaliser les collages d'éprouvettes d'aluminium selon la norme ASTM D 1002, sous une presse permettant de fixer les conditions de temps : 1 minute, de température : 80°C, et de pression : 1 bar.

La série d'éprouvettes est séparée en 4 lots. Les 4 lots sont évalués selon la méthode de fluage en cisaillement SAFT (Shear Adhesion Failure Temperature). Selon cette méthode une charge de 1 kg est suspendue à une éprouvette préparée pour l'essai de cisaillement. L'ensemble est placé dans une étuve programmée pour une montée en température de 5°C par minute. Le SAFT est la température à laquelle le joint se rompt. Cette mesure permet de déterminer la température maximum d'utilisation de l'adhésif.

Un lot N°1 d'éprouvettes est conservé à l'abri de l'humidité puis mesuré le lendemain du collage.

Un lot N°2 d'éprouvettes est maintenu pendant 7 jours à 70°C en présence de vapeur d'eau saturante, puis mesuré 24 heures aprés avoir été sorti de ce traitement de vieillissement humide accéléré.

Un lot N°3 d'éprouvettes est mesuré après être resté 7 jours en atmosphère et température ambiantes.

Un lot N°4 d'éprouvettes est mesuré après être resté 14 jours en atmosphère et température ambiantes.

Les températures de séparation du joint sont les suivantes :

Lot N°1 = 88°C
Lot N02 = 210°C
Lot N°3 = 140°C
Lot N°4 = 225°C

EXEMPLE 2

Dans un malaxeur BRABENDER, régulé à 75°C et dont les pales tournent à 50 tours par minute, on introduit :

- 32 g. d'un terpolymère de composition en poids :

71,1 % d'éthylène
25 % d'acétate de vinyle
3,9 % d'acrylate d'hydroxyéthyle.

L'indice de fluidité du terpolymère (melt index) est de 250 mesuré dans les conditions de l'Exemple 1. Sa viscosité à l'état fondu est de 1000 Pa.s.

- 16 g. de résine terpène-phénol (DERTOPHENE T ® ).

Quand le mélange est homogène et sa température stabilisée à 75°C, on introduit 3,6 g. d'isophorone diisocyanate.

La préparation possède une viscosité d'environ 100 Pa.s. Elle est utilisée, comme dans l'exemple 1, pour réaliser des collages d'éprouvettes d'aluminium, la température étant de 60°C.

La SAFT, mesurée dans les conditions décrites est de 70°C pour les assemblages mesurés juste après collage et supérieure à 225°C pour ceux mesurés après 1 semaine de vieillissement naturel ou humide accéléré.

EXEMPLE 3

Dans un malaxeur BRABENDER, régulé à 70°C et dont les pales tournent à 50 tours par minute, on introduit :

- 15 g. d'un terpolymère de composition en poids :

82,7 % d'éthylène
6,3 % d'acétate de vinyle
11 % d'alcool vinylique (MELTHENE 6822 ® )

L'indice de fluidité du terpolymère (melt index) est de 160 mesuré dans les conditions de l'Exemple 1. Sa viscosité à l'état fondu est de 1500 Pa.s.

- 15,6 g. de copolymère de composition suivante :

72 % d'éthylène
28 % d'acétate de vinyle d'indice de fluidité (melt index) de 800 (EVATANE 28800 ® )

- 15,6 g. de résine terpène-phénol (URAVAR 75205 ® )

Quand le mélange est homogène et sa température stabilisée à 70°C on introduit 13 g. d'isophorone diisocyanate.

La viscosité à l'état fondu du mélange est d'environ 100 Pa.s. Le collage d'éprouvettes d'aluminium est réalisé à 70°C pendant 1 minute sous 1 bar.

La tenue en température SAFT est de 70°C après collage et supérieure à 225°C après 7 jours de vieillissement humide accéléré.

EXEMPLE 4

a) Un copolymère éthylène-acétate de vinyle à 28 % en poids d'acétate de vinyle et ayant un indice de fluidité (melt index) de 2500 (ESCORENE MV 02528 ® ) est partiellement hydroxylé en solution dans le méthanol par la soude à 50°C pendant 8 heures.

L'élimination de l'acétate de sodium formé est faite par lavage avec un mélange d'eau et d'acétone. Le produit est rincé une dernière fois à l'acétone. Le produit obtenu possède les caractéristiques suivantes :

composition :

| | |
|---|---|
| éthylène | 72,6 % |
| acétate de vinyle | 22 % |
| alcool vinylique | 6 % |

L'indice de fluidité est pratiquement inchangé. Sa viscosité à l'état fondu est de 80 Pa.s.

b) Dans un malaxeur BRABENDER sont mélangés à 90°C :

- 36 g. de ce produit
- 18,5 g. de DERTOPHENE T ®

Après homogénéisation du mélange, la température est abaissée à 70°C et on ajoute 4,5 g. d'ISONATE 143 ® (polyisocyanate composé de 20 % de trimères du phénylisocyanate et 80 % de 4,4′méthylènediphénylisocyanate (MDI).

La viscosité à l'état fondu de mélange obtenu est d'environ 10 Pa.s.

Ce mélange est utilisé pour fabriquer des assemblages d'éprouvettes d'aluminium. Les conditions de collage sont de 1 minute à 70°C sous 1 bar.

La tenue en température SAFT est de 60°C après collage, de 85°C après 1 journée et supérieure à 225°C après 4 jours de vieillissement naturel ou 7 jours de vieillissement accéléré.

c) Ce mélange peut être conservé sans évolution de son degré de réticulation, évalué par des mesures de taux de gel dans le toluène, pendant plus de 9 jours à l'abri de l'humidité.

EXEMPLE 5

Dans le malaxeur BRABENDER sont mélangées pendant 10 minutes à 65°C :

- 45 g. du copolymère hydrolysé de l'Exemple 4
- 5,7 g. d'ISONATE 143 ®

Le mélange obtenu possède une viscosité à l'état fondu de 50 Pa.s.

Il est utilisé pour fabriquer des assemblages d'éprouvettes d'aluminium. Les conditions de collage sont de 1 minute à 70°C sous 1 bar.

La tenue en température SAFT est de 60°C après collage, 75°C après 1 journée, et, supérieure à 225°C soit après 7 jours de vieillissement humide accéléré, soit après 15 jours de vieillissement naturel à l'atmosphère ambiante.

EXEMPLE 6 (comparatif)

Dans le malaxeur BRABENDER sont homogénéisés à 90°C :
- 29,2 g. du terpolymère de l'Exemple 1
- 12,6 g. de DERTOPHENE T ®
- 12,6 g. de cire AC 430 ®
- 3,0 g. de MDI bloqué par l'epsiloncaprolactame préparé comme décrit dans le FR 2 616 155

Ce mélange est utilisé dans les conditions de l'Exemple 1 à la préparation des assemblages d'éprouvettes d'aluminium à une température de 80°C pendant 1 minute sous 1 bar.

La tenue en température SAFT mesurée avant et après vieillissement naturel de 14 jours et humide accéléré de 7 jours est toujours de 90°C. Une telle composition adhésive ne réticule pas à la température ambiante.

## Revendications

1. Composition adhésive thermofusible réticulable à base de copolymère d'éthylène-acétate de vinyle possédant des fonctions hydroxyles et de polyisocyanate caractérisée en ce qu'elle se présente sous la forme d'un prépolymère contenant des fonctions isocyanates libres, résultant de la réaction du copolymère éthylène-acétate de vinyle contenant des fonctions hydroxyles et d'un polyisocyanate en excès.

2. Composition selon la revendication 1 caractérisée en ce que le prépolymère contient de 1 à 15 % en poids de fonctions isocyanates libres.

3. Composition selon l'une des revendications 1 à 2 caractérisée en ce que la viscosité initiale à l'état fondu du copolymère éthylène-acétate de vinyle hydroxylé est comprise entre 0,1 et 10000 Pa.s.

4. Composition selon l'une des revendications 1 à 3 caractérisée en ce que pour 100 à 30 parties en poids de prépolymère on associe 0 à 70 parties en poids de résine collante (tackifiante).

5. Composition selon la revendication 4 caractérisée en ce que la viscosité du copolymère éthylène-acétate de vinyle hydroxylé à l'état fondu est comprise entre 100 et 10000 Pa.s.

6. Composition selon l'une des revendications 1 à 5 caractérisée en ce que le produit de son association avec la résine collante possède à l'état fondu une viscosité comprise entre 0,1 et 100 Pa.s.

7. Composition selon l'une des revendications 1 à 6 caractérisée en ce que le polyisocyanate est un diisocyanate.

8. Composition selon l'une des revendications 1 à 7 caractérisée en ce qu'elle réticule à l'humidité ambiante.

9. Procédé de fabrication de la composition des revendications 1 à 8 caractérisé en ce qu'on fait réagir par mélange à l'état fondu un copolymère éthylène-acétate de vinyle possédant des fonctions hydroxyles avec un polyisocyanate en proportion telle que le rapport des fonctions isocyanates du polyisocyanate aux fonctions hydroxyles du copolymère est inférieur ou égal à 5 et supérieur à 1.

10. Procédé selon la revendication 9 caractérisé en ce que l'on ajoute au milieu réactionnel une résine collante (tackifiante) à l'état fondu.

11. Procédé selon la revendication 10 caractérisé en ce que la résine collante est ajoutée en quantité telle que la viscosité de l'ensemble du mélange à l'état fondu est compris entre 0,1 et 100 Pa.s.

12. Procédé selon l'une des revendications 9 à 11 caractérisé en ce que le copolymère éthylène-acétate de vinyle possédant des fonctions hydroxyles contient de $2x10^{-2}$ à $15x10^{-2}$ mole de fonctions hydroxyles pour 100 g de copolymère.

13. Procédé selon l'une des revendications 9 à 12 caractérisé en ce que le copolymère possédant des fonctions hydroxyles est une combinaison en poids rapporté aux monomères initiaux de 45 à 93 % d'éthylène, de 5 à 40 % d'acétate de vinyle et de 2 à 15 % de monomère éthyléniquement insaturé possédant une fonction hydroxyle.

## Claims

1. Crosslinkable heat-fusible adhesive composition based on an ethylene/vinyl acetate copolymer possessing hydroxyl groups and on a polyisocyanate, characterised in that it is in the form of a prepolymer containing free isocyanate groups, resulting from the reaction of the ethylene/vinyl acetate copolymer containing hydroxyl groups with an excess of a polyisocyanate.

2. Composition according to Claim 1, characterised in that the prepolymer contains from 1 to 15% by weight of free isocyanate groups.

3. Composition according to either of Claims 1 and 2, characterised in that the initial viscosity, in the molten state, of the hydroxyl-containing ethylene/vinyl acetate copolymer is between 0.1 and 10,000 Pa.s.

4. Composition according to any of Claims 1 to 3, characterised in that 0 to 70 parts by weight of adhesive (tackifying) resin are combined with 100 to 30 parts by weight of prepolymer.

5. Composition according to Claim 4, characterised in that the viscosity of the hydroxyl-containing ethylene/vinyl acetate copolymer in the molten state is between 100 and 10,000 Pa.s.

6. Composition according to any of Claims 1 to 5, characterised in that the product of its combination with the adhesive resin has a viscosity, in the molten state, of between 0.1 and 100 Pa.s.

7. Composition according to any of Claims 1 to 6, characterised in that the polyisocyanate is a diisocyanate.

8. Composition according to any of Claims 1 to 7, characterised in that it crosslinks at ambient humidity.

9. Process for the preparation of the composition of Claims 1 to 8, characterised in that an ethylene/vinyl acetate copolymer, possessing hydroxyl groups, is caused to react, by mixing in the molten state, with a polyisocyanate in such proportion that the ratio of isocyanate groups of the polyisocyanate to hydroxyl groups of the copolymer is less than or equal to 5 and greater than 1.

10. Process according to Claim 9, characterised in that an adhesive (tackifying) resin is added, in the molten state, to the reaction mixture.

11. Process according to Claim 10, characterised in that the adhesive resin is added in such amount that the viscosity of the whole of the mixture, in the molten state, is between 0.1 and 100 Pa.s.

12. Process according to any of Claims 9 to 11, characterised in that the ethylene/vinyl acetate copolymer, possessing hydroxyl groups, contains from $2\times10^{-2}$ to $15\times10^{-2}$ mol of hydroxyl groups per 100 g of copolymer.

13. Process according to any of Claims 9 to 12, characterised in that the copolymer possessing hydroxyl groups is a combination, by weight in terms of the initial monomers, of 45 to 93% of ethylene, 5 to 40% of vinyl acetate and 2 to 15% of ethylenically unsaturated monomer possessing a hydroxyl group.

## Patentansprüche

1. Vernetzbarer Schmelzkleber auf Basis von Polyisocyanat und Hydroxylgruppen enthaltenden Copolymeren von Ethylen und Vinylacetat, dadurch gekennzeichnet, daß er in Form eines Prepolymeren mit freien Isocyanatgruppen vorliegt, das durch Reaktion des hydroxylgruppenhaltigen Ethylen-Vinylacetat-Copolymeren und eines überschüssigen Polyisocyanats gebildet wurde.

2. Schmelzkleber nach Anspruch 1, dadurch gekennzeichnet, daß das Polymere 1 bis 15 Gew. % der freien Isocyanatgruppen enthält.

3. Schmelzkleber nach einem der Ansprüche 1 oder 2, dadurch gekennzeichnet, daß die Ausgangsviskosität des hydroxylierten Ethylen-Vinylacetat-Copolymeren im geschmolzenen Zustand zwischen 0,1 und 10.000 Pa.s. beträgt.

4. Schmelzkleber nach einem der Ansprüche 1 bis 3, dadurch gekennzeichnet, daß man auf 100 bis 30 Gewichtsteile des Prepolymeren 0 bis 70 Gewichtsteile eines klebenden (klebrigmachenden) Harzes beimischt.

5. Verfahren nach Anspruch 4, dadurch gekennzeichnet, daß die Viskosität des hydroxylierten Ethylen-Vinylacetat-Copolymeren im geschmolzenen Zustand zwischen 100 und 10.000 Pa.s. liegt.

6. Schmelzkleber nach einem der Ansprüche 1 bis 5, dadurch gekennzeichnet, daß das Produkt seiner Vereinigung mit dem Klebharz im geschmolzenen Zustand eine Viskosität zwischen 0,1 und 100 Pa.s. besitzt.

7. Schmelzkleber nach einem der Ansprüche 1 bis 6, dadurch gekennzeichnet, daß das Polyisocyanat ein Diisocyanat ist.

8. Schmelzkleber nach einem der Ansprüche 1 bis 7, dadurch gekennzeichnet, daß er bei Raumfeuchtigkeit vernetzt.

9. Verfahren zur Herstellung des Klebharzes nach den Ansprüchen 1 bis 8, dadurch gekennzeichnet, daß man ein Hydroxylgruppen enthaltendes Ethylen-Vinylacetat-Copolymeres mit einem Polyisocyanat durch Vermischen im geschmolzenen Zustand in einem solchen Verhältnis reagieren läßt, daß das Verhältnis der Isocyanatgruppen des Polyisocyanats zu den Hydroxylgruppen des Copolymeren kleiner oder gleich 5 und größer als 1 ist.

10. Verfahren nach Anspruch 9, dadurch gekennzeichnet, daß man dem Reaktionsgemisch ein klebendes (klebrigmachendes) Harz in geschmolzenem Zustand zusetzt.

11. Verfahren nach Anspruch 10, dadurch gekennzeichnet, daß das klebende Harz in einer solchen Menge zugegeben wird, daß die Viskosität des Gesamtgemisches im geschmolzenen Zustand zwischen 0,1 und 100 Pa.s. liegt.

12. Verfahren nach einem der Ansprüche 9 bis 11, dadurch gekennzeichnet, daß das Ethylen-Vinylacetat-Copolymere mit Hydroxylgruppen $2x10^{-2}$ bis $15x10^{-2}$ Mol Hydroxylgruppen auf 100 g des Copolymeren enthält.

13. Verfahren nach einem der Ansprüche 9 bis 12, dadurch gekennzeichnet, daß das hydroxylgruppenhaltige Copolymere, bezogen auf die eingesetzten Monomeren, die gewichtsmäßige Kombination von 45 bis 93 % Ethylen, 5 bis 40 % Vinylacetat und 2 bis 15 % eines ethylenisch ungesättigten Monomeren mit einer Hydroxylgruppe ist.